# EUROPEAN PATENT APPLICATION

(11) **EP 4 707 636 A1**
(43) Date of publication of application: **11.03.2026**
(21) Application number: 24764170.7
(22) Date of filing: 27.02.2024
(51) Int. Cl.: F16H 1/32, F16H 55/08, H02K 7/116

(54) **ROTATABLE REDUCING ACTUATOR HAVING POWER TRANSFER PORTION OVERLAPPING STRUCTURE**

(30) Priority: 28.02.2023 KR 20230027052
(71) Applicant: Pyong Hwa Valeo Co., Ltd., Daegu 42701 (KR)
(72) Inventor: LEE, Hee Rak, Daegu 42760 (KR)
(74) Representative: Isarpatent
(86) International application number: PCT/KR2024/002510
(87) International publication number: WO 2024/181771

(57) **Abstract**

The present invention relates to a rotary reduction actuator capable of performing more stable power transmission by reducing shaking of gears during a power transmission process, by configuring a center line of a tooth-contact section between an input gear and an output-shaft gear to be positioned within a meshing section between the input gear and a ring gear in a reduction gear unit for reducing and outputting rotation of a drive shaft. The rotary reduction actuator includes a drive shaft installed on an output side of an electric motor, and a reduction gear unit configured to reduce and output rotation of the drive shaft. The reduction gear unit includes an input gear disposed eccentrically with respect to the drive shaft, an output-shaft gear interlocked with the input gear via a wobbling-motion inducing part, and a ring gear internally fitted to the input gear via an eccentric tooth-meshing portion. The eccentric tooth-meshing portion includes external teeth formed on an outer circumferential surface of the input gear and internal teeth formed on an inner circumferential surface of the ring gear. The wobbling-motion inducing part includes paired protrusions provided on an inner circumferential surface of the input gear and paired receiving grooves provided on an outer circumferential surface of the output-shaft gear. A center line of a tooth-contact section between the paired protrusions of the input gear and the paired receiving grooves of the output-shaft gear is positioned within a meshing section between the external teeth of the input gear and the internal teeth of the ring gear.

## Description

### TECHNICAL FIELD

The present invention relates to a rotary reduction actuator having an overlapping structure of the power transmission portion, and more particularly to a rotary reduction actuator having a power transfer portion overlapping structure which is configured such that a center line of a tooth-contact section between an input gear and an output-shaft gear in a reduction gear unit that outputs reduced rotation of a drive shaft is positioned within a meshing section between the input gear and a ring gear, thereby reducing shaking of gears during a power transfer process to perform a more stable power transmission, and at the same time, reducing an axial package of the reduction gear unit.

### BACKGROUND ART

Generally, devices that provide driving force generated from a power source to an output side have been developed in various forms, including a linear actuator that converts rotary driving force into linear direction and outputs the same, a rotary actuator that transfers rotary driving force as it is to the output, and a conversion actuator that transfers driving force in a linear direction to an output side in a linear or rotary direction.

In particular, development has also been made for rotary reduction actuators capable of reducing rotation speed of an input side by means of a reduction device in a process of transferring driving force to an output side, thereby multiplying input-side torque and providing the same to the output side.

For example, the linear actuator outputs an operating force in a linear direction by using a conversion mechanism such as a ball screw to convert rotary driving force generated from an electric motor into a linear direction, the rotary actuator multiplies and outputs rotary driving force generated from an electric motor by means of a torque-increasing mechanism such as a reducer, and the conversion actuator transfers driving force in a linear direction directly to an output side by using a linear motor, or transfers rotary driving force generated from an electric motor directly to the output side.

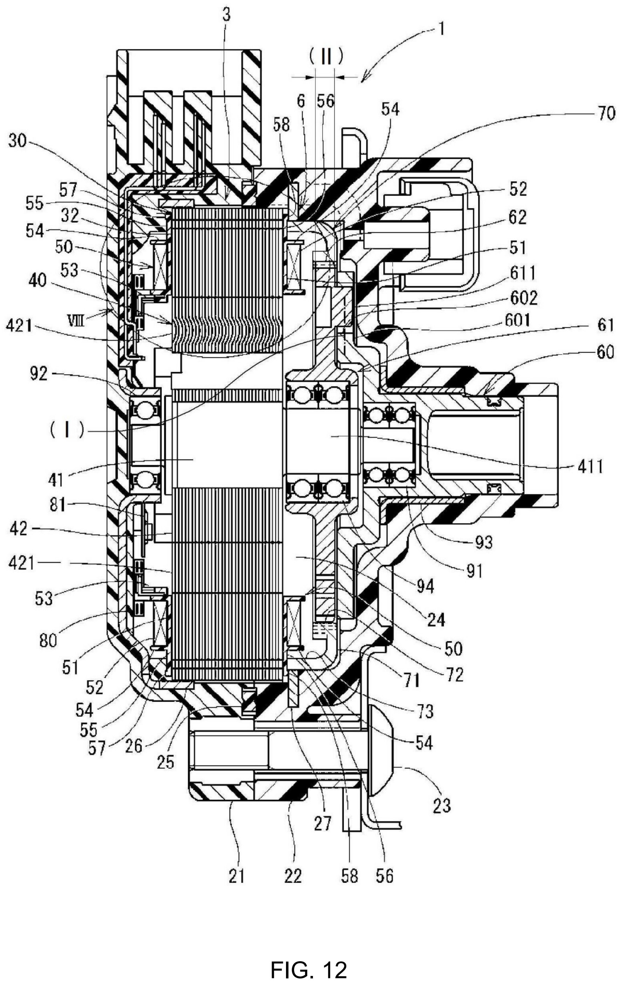

As a conventional rotary reduction actuator, a rotary actuator disclosed in Japanese Laid-Open Patent Publication No. 2010-193653 has a structure in which a pin 611 of a sun gear 61 is inserted into a pin hole 602 formed in a flange 601 of an output shaft 60 to be in tooth contact, as shown in FIG. 12.

In addition, an internal gear 72 formed on an inner circumferential surface of a body 71 of a ring gear 70 has a structure engaged with an external gear 62 formed on an outer circumferential surface of the sun gear 61.

Accordingly, in the conventional rotary reduction actuator, the self-rotation of the sun gear 61 can be reduced and transferred to the output shaft 60 by a tooth-contact structure in which the pin 611 of the sun gear 61 is inserted into the pin hole 602 of the output shaft 60, and a tooth-engagement structure in which the external gear 62 of the sun gear 61 is engaged with the internal gear 72 of the ring gear 70.

In such a configuration, a center line (I) of a tooth-contact structure portion caused by insertion between the pin 611 of the sun gear 61 and the pin hole 602 of the output shaft 60 is located in a portion deviated from a meshing section (II) caused by tooth engagement between the external gear 62 of the sun gear 61 and the internal gear 72 of the ring gear 70.

As a result, in the conventional rotary actuator, since a center line (I) of a tooth-contact structure portion caused by insertion between the pin 611 of the sun gear 61 and the pin hole 602 of the output shaft 60 is located in a portion deviated from a tooth-engagement section (II) caused by tooth engagement between the external gear 62 of the sun gear 61 and the internal gear 72 of the ring gear 70, shaking of gears occurs in a process of power transmission, so that stable power transmission cannot be performed.

### DETAILED DESCRIPTION OF THE INVENTION

### TECHNICAL PROBLEM

The technical problem to be solved by the present invention is to provide a rotary reduction actuator having an overlapping power transmission structure, in which a center line of a tooth-contact section between an input gear and an output-shaft gear is positioned within a meshing section between the input gear and a ring gear in a reduction gear unit configured to reduce and output rotation of a drive shaft, thereby reducing shaking of gears during power transmission to enable more stable power delivery, while simultaneously reducing an axial package dimension of the reduction gear unit.

### SOLUTION TO PROBLEM

According to a preferred embodiment of the present invention, a rotary reduction actuator having an overlapping power transmission structure is provided, including a drive shaft installed on an output side of an electric motor and a reduction gear unit configured to reduce and output rotation of the drive shaft, wherein the reduction gear unit includes an input gear disposed eccentrically with respect to a rotation center of the drive shaft and installed to be rotatable relative to the drive shaft, an output-shaft gear disposed coaxially with the drive shaft and interlocked with the input gear via a wobbling-motion inducing part while being installed to be rotatable relative to the drive shaft, and a ring gear internally fitted to the input gear via an eccentric tooth-meshing portion and configured to induce reduced rotation of the output-shaft gear according to wobbling motion of the input gear; the eccentric tooth-meshing portion includes external teeth formed on an outer circumferential surface of the input gear and internal teeth formed on an inner circumferential surface of the ring gear and eccentrically meshed with the external teeth; the wobbling-motion inducing part includes paired protrusions provided on an inner circumferential surface of the input gear and paired receiving grooves provided on an outer circumferential surface of the output-shaft gear and configured to allow wobbling motion by receiving the paired protrusions; and a center line of a tooth-contact section between the paired protrusions of the input gear and the paired receiving grooves of the output-shaft gear is positioned within a meshing section between the external teeth of the input gear and the internal teeth of the ring gear.

According to a preferred embodiment of the present invention, the input gear includes a central boss portion for axial coupling with an eccentric shaft portion of the drive shaft, a first horizontal section extending radially outward from the central boss portion, a stepped portion extending downward in a thickness direction from the first horizontal section, and a second horizontal section extending radially outward from the stepped portion, wherein the external teeth are formed on an outer circumferential surface of the second horizontal section, and the paired protrusions are formed on an inner circumferential surface of the stepped portion, in a rotary reduction actuator having an overlapping power transmission structure.

According to a preferred embodiment of the present invention, the output-shaft gear includes a central boss portion for axial coupling with a mounting shaft portion of the drive shaft, a first horizontal section extending radially outward from the central boss portion, a stepped portion extending upward in a thickness direction from the first horizontal section, and a second horizontal section extending radially outward from the stepped portion, wherein the central boss portion is formed to extend in an axial direction from a boss portion of the output-shaft gear, and the paired receiving grooves are formed on an outer circumferential surface of the second horizontal section, in a rotary reduction actuator having an overlapping power transmission structure.

According to a preferred embodiment of the present invention, the paired protrusions are formed in a convex radial structure projecting radially inward from an inner circumferential surface of the input gear toward the paired receiving grooves of the output-shaft gear, and the paired receiving grooves are formed in a concave radial structure recessed radially outward from an outer circumferential surface of the output-shaft gear toward the paired protrusions of the input gear, in a rotary reduction actuator having an overlapping power transmission structure.

According to a preferred embodiment of the present invention, the paired protrusions and the paired receiving grooves are each formed as arc-shaped structures having appropriate curvature and are configured to include a contact region where contact is made therebetween in a rotational direction of the input gear and a non-contact region where no contact is made therebetween, and a proper clearance is provided between the paired protrusions and the paired receiving grooves between the contact region and the non-contact region, in a rotary reduction actuator having an overlapping power transmission structure.

According to a preferred embodiment of the present invention, the paired protrusions and the paired receiving grooves are configured such that contact is limited to at least one of the contact regions among the contact regions, and simultaneous contact at a plurality of the contact regions is not made, in a rotary reduction actuator having an overlapping power transmission structure.

According to a preferred embodiment of the present invention, the paired protrusions are configured as structures symmetrical in left and right with respect to a reference axis extending in a radial direction of the input gear in a plane of the input gear, and the paired receiving grooves are configured as structures symmetrical in left and right with respect to a reference axis extending in a radial direction of the ring gear in a plane of the ring gear, in a rotary reduction actuator having an overlapping power transmission structure.

According to a preferred embodiment of the present invention, the paired protrusions respectively include the contact region and the non-contact region on left and right sides with respect to the reference axis extending in a radial direction of the input gear, and the paired receiving grooves respectively include the contact region and the non-contact region on left and right sides with respect to the reference axis extending in a radial direction of the ring gear, in a rotary reduction actuator having an overlapping power transmission structure.

### ADVANTAGEOUS EFFECTS OF THE INVENTION

According to an embodiment of the present invention, in a rotary reduction actuator, since a center line of a tooth-contact section between an input gear and an output-shaft gear is positioned within a meshing section between the input gear and a ring gear in a configuration of a reduction gear unit configured to reduce and output rotation of a drive shaft, shaking of gears respectively occurring at a tooth-contact portion between the paired protrusions of the input gear and the paired receiving grooves of the output-shaft gear, and at a tooth-meshing portion between external teeth of the input gear and internal teeth of the ring gear during power transmission can be reduced, thereby enabling more stable transfer of reduced power.

In particular, according to an embodiment of the present invention, since the overlapping power transmission structure in the rotary reduction actuator is configured such that the center line of the tooth-contact section between the input gear and the output-shaft gear is positioned within the meshing section between the input gear and the ring gear, an axial package dimension of the reduction gear unit can be minimized to the greatest extent, and thus, when the rotary reduction actuator is applied to a vehicle, a space occupied by components can be reduced, providing advantageous effects in terms of spatial freedom during layout design with surrounding components.

### BRIEF DESCRIPTION OF THE DRAWINGS

Fig. 1 is a perspective view illustrating an external appearance of a rotary reduction actuator according to an embodiment of the present invention.
Fig. 2 is a longitudinal sectional view illustrating a coupling relationship of components constituting the rotary reduction actuator according to an embodiment of the present invention.
Fig. 3 is an exploded perspective view illustrating external components constituting the rotary reduction actuator according to an embodiment of the present invention.
Fig. 4 is an exploded perspective view illustrating components installed inside a gear housing shown in Fig. 3, in a separated state.
Fig. 5 is a front view illustrating a drive shaft shown in Fig. 4.
Fig. 6 is a perspective view illustrating a state in which a reduction gear unit is assembled to the gear housing shown in Fig. 4.
Fig. 7 is an exploded perspective view illustrating a first-stage separation state in which the reduction gear unit shown in Fig. 6 is separated from the gear housing.
Fig. 8 is an exploded perspective view illustrating a second-stage separation state in which the reduction gear unit shown in Fig. 6 is separated from the gear housing.
Fig. 9 is a bottom exploded perspective view illustrating the separated state shown in Fig. 8.
Fig. 10 is a longitudinal sectional view illustrating a coupling relationship of components constituting the reduction gear unit shown in Fig. 7.
Fig. 11 is a front view illustrating a coupling portion between paired protrusions of the input gear and paired receiving grooves of the output-shaft gear in the reduction gear unit shown in Figs. 9 and 10.
Fig. 12 is a longitudinal sectional view illustrating a conventional rotary reduction actuator.

### DETAILED DESCRIPTION OF EMBODIMENTS

Hereinafter, preferred embodiments of the present invention will be described in detail with reference to the accompanying exemplary drawings.

Referring to the drawings, a rotary reduction actuator 1 having an overlapping power transmission structure according to an embodiment of the present invention includes a housing 10, an electric motor 20, a drive shaft 30, and a reduction gear unit. In this configuration, the reduction gear unit includes an input gear 40, an output-shaft gear 50, and a ring gear 60.

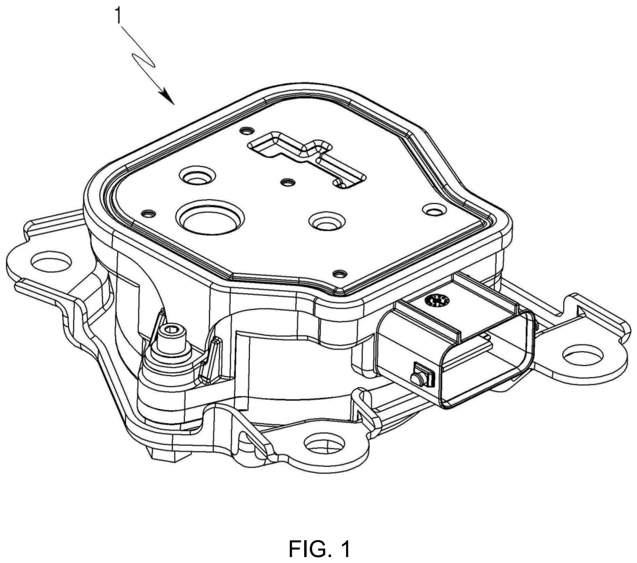

Referring to Figs. 1 to 3, the housing 10 is largely divided into a motor housing 11 accommodating the electric motor 20, and a gear housing 12 accommodating the reduction gear unit.

The housing 10 further includes an upper cover 13 disposed above the motor housing 11 and a lower cover 14 disposed below the gear housing 12. Here, the lower cover 14 corresponds to a type of mounting bracket configured to allow the rotary reduction actuator 1 to be mounted at an appropriate position.

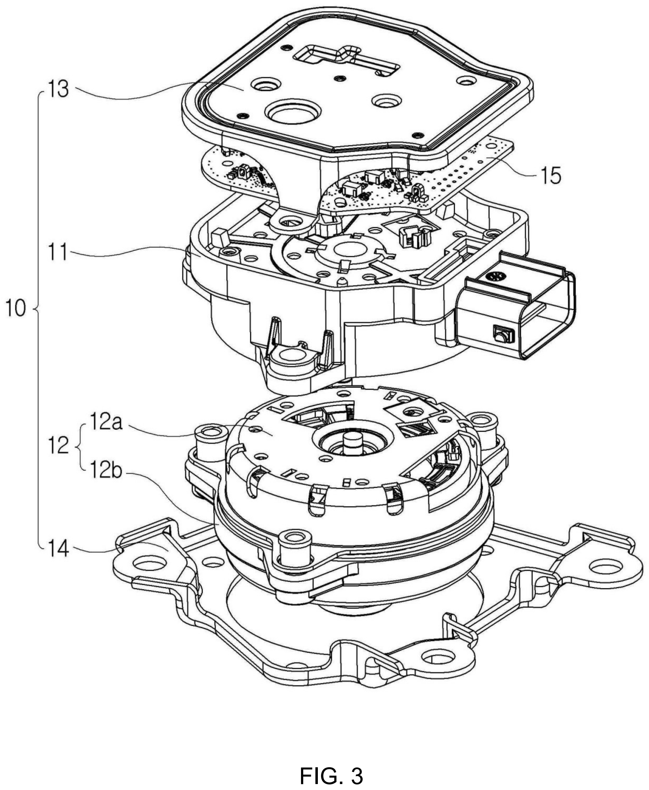

The gear housing 12 may be divided into an upper casing 12a and a lower casing 12b assembled in a vertical direction. In Fig. 3, reference numeral 15, not specifically described, denotes a printed circuit board configured to input a control signal from outside to control driving of the electric motor 20 or to output information on rotational displacement of the reduction gear unit to the outside.

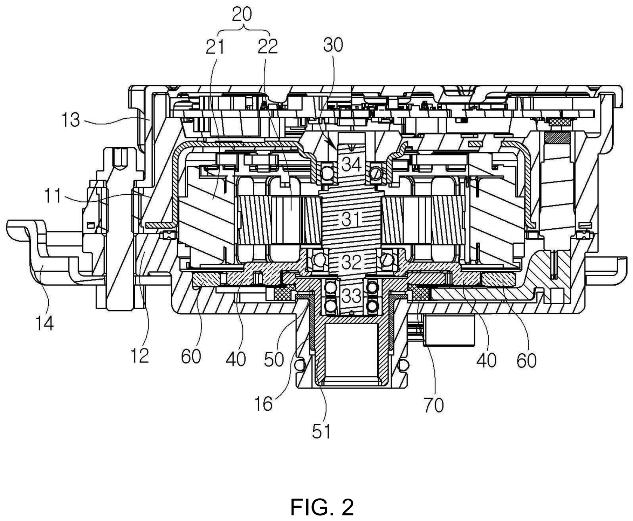

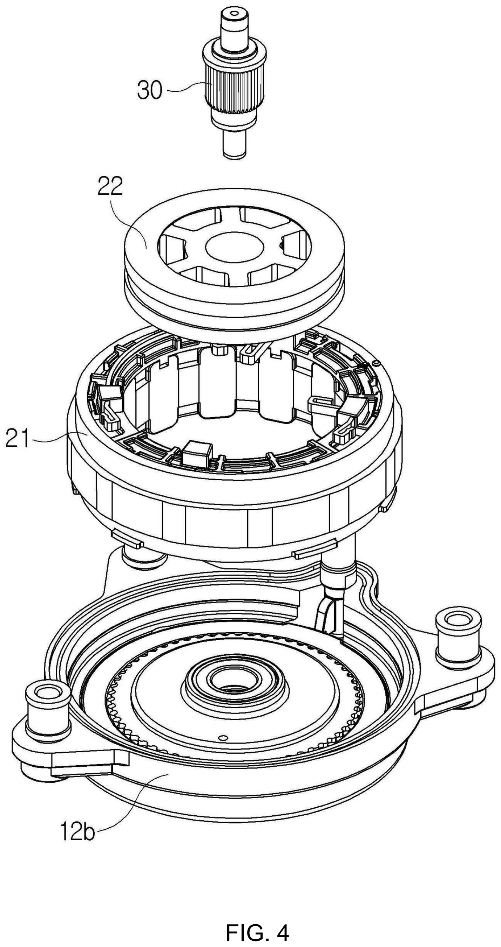

Referring to Figs. 2 and 4, the electric motor 20 includes a stator core 21 and a rotor core 22.

In this configuration, the stator core 21 is configured to be disposed concentrically with respect to a shaft center of the drive shaft 30, which defines a rotation center of the electric motor 20. In addition, the rotor core 22 is installed on an outer circumferential surface coaxial with the shaft center of the drive shaft 30 and configured to rotate integrally when energized.

Referring to Figs. 2, 4, and 5, the drive shaft 30 is configured to be interlockable with the rotor core 22 of the electric motor 20.

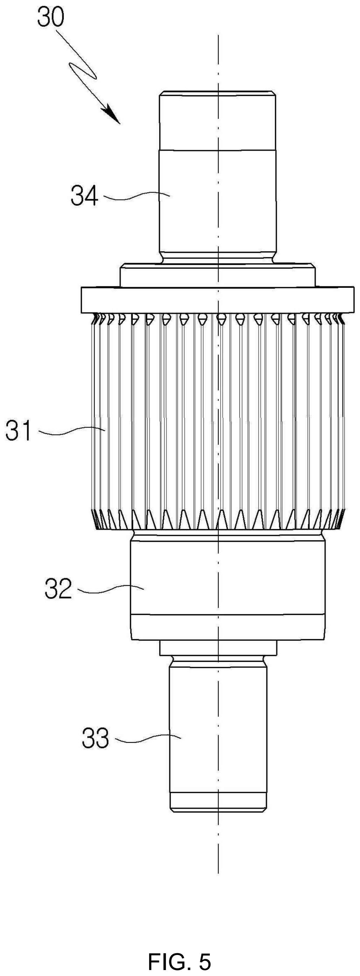

For this purpose, as shown in Fig. 5, the drive shaft 30 integrally includes a reference shaft portion 31 located generally at the center for axial coupling with the rotor core 22 of the electric motor 20, an eccentric shaft portion 32 extending in an axial direction from one side of the reference shaft portion 31 for eccentric installation of the input gear 40 constituting the reduction gear unit to allow relative rotation with respect to the drive shaft 30, a mounting shaft portion 33 extending in an axial direction from one side of the eccentric shaft portion 32 for coaxial installation of the output-shaft gear 50 constituting the reduction gear unit to allow relative rotation with respect to the drive shaft 30, and an installation shaft portion 34 extending in an axial direction from the other side of the reference shaft portion 31 for coaxial installation in a rotatable state with respect to the motor housing 11.

In this configuration, the eccentric shaft portion 32 is formed as a type of cam-shaped structure in which one side portion is eccentrically projected radially outward from a shaft center defined by the reference shaft portion 31, the mounting shaft portion 33, and the installation shaft portion 34, so that the input gear 40 of the reduction gear unit can implement a rotational displacement of eccentric motion when the drive shaft 30 rotates.

In addition, as shown in Fig. 2, the reference shaft portion 31, the eccentric shaft portion 32, the mounting shaft portion 33, and the installation shaft portion 34, which constitute the drive shaft 30, are each rotatably supported via a plurality of bearing members provided inside the motor housing 11.

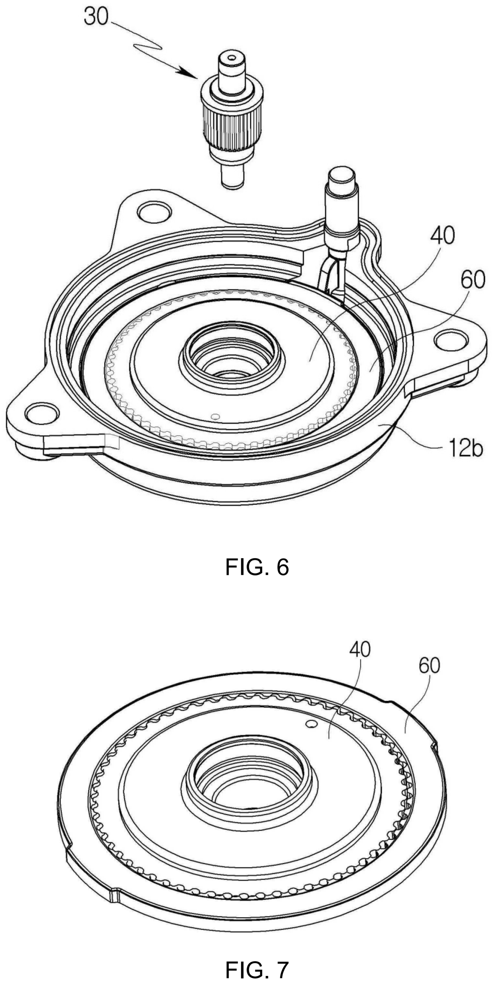

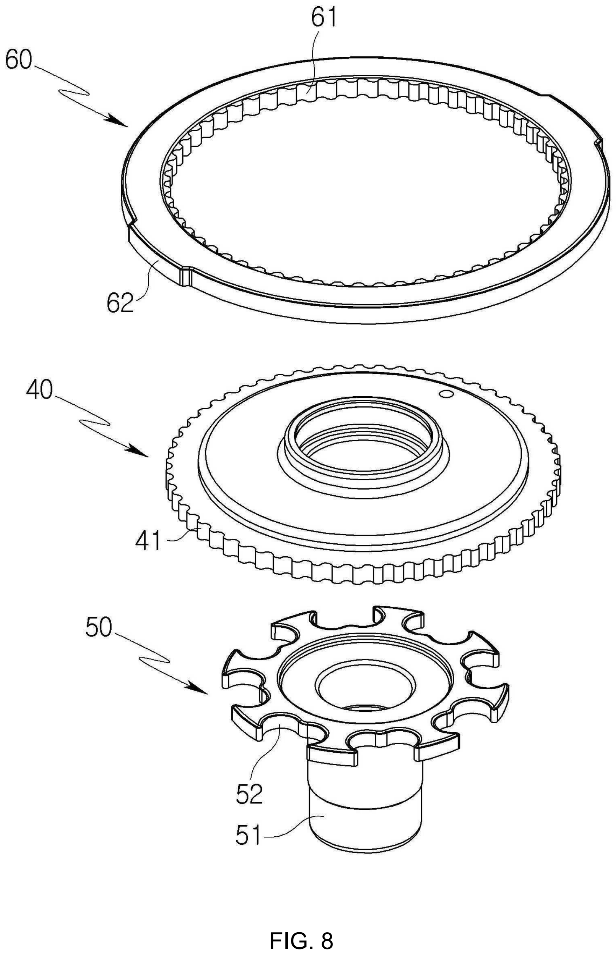

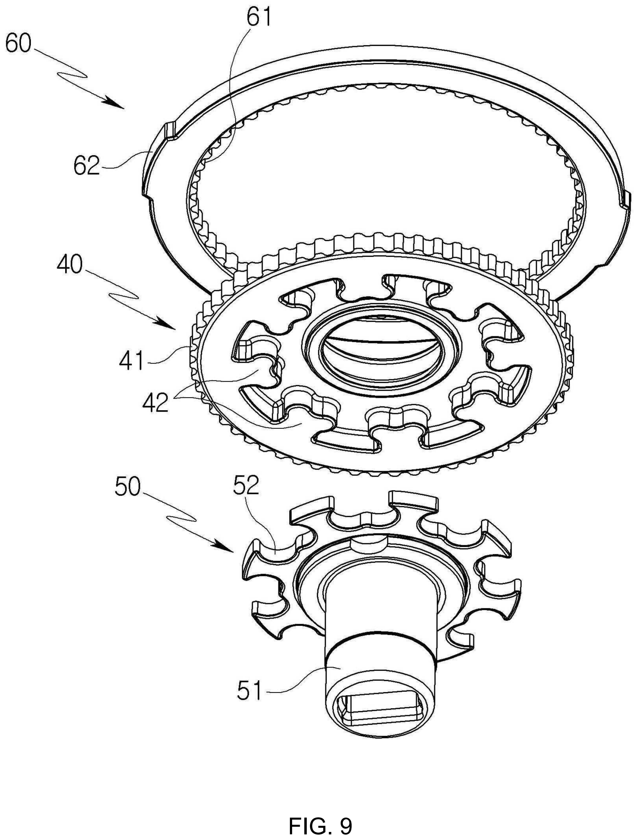

Referring to Figs. 6 to 11, the reduction gear unit includes the input gear 40, the output-shaft gear 50, and the ring gear 60.

In this configuration, the input gear 40 and the output-shaft gear 50 are installed to be assembled on an outer circumferential surface of the drive shaft 30. In addition, the ring gear 60 is installed to be assembled in a state in which rotation is restricted with respect to the lower casing 12b constituting the gear housing 12. Detailed configurations of the input gear 40, the output-shaft gear 50, and the ring gear 60 are as follows.

The input gear 40 is configured to be disposed eccentrically with respect to a rotation center of the drive shaft 30 via the eccentric shaft portion 32. In particular, the input gear 40 is configured to be installed to be rotatable relative to the drive shaft 30 via a bearing member.

In addition, the input gear 40 is configured to continuously have external teeth 41 along an entire circumferential region of its outer circumferential surface for eccentric tooth-meshing with the ring gear 60.

The output-shaft gear 50 is configured to be disposed coaxially with respect to a rotation center of the drive shaft 30 via the mounting shaft portion 33. In particular, the output-shaft gear 50 is configured to be interlockable with the input gear 40 via a wobbling-motion inducing part, and to be installed to be rotatable relative to the drive shaft 30 via a bearing member.

In addition, the output-shaft gear 50 integrally includes a boss portion 51 for coupling in a rotatable state relative to the lower casing 12b of the gear housing 12. In this configuration, the boss portion 51 is formed to extend long in an axial direction from the output-shaft gear 50, and is inserted into an interior of a hollow sleeve 16 (see Fig. 2) mounted in an coupling hole (not shown) of the gear housing 12 so as to maintain stable rotation.

In particular, the boss portion 51 serves to output rotational power provided from the output-shaft gear 50 to the outside. For example, the boss portion 51 may be used for shaft coupling for power transmission to an external device (not shown), because rotational power provided from the output-shaft gear 50 can be delivered to the external device via the boss portion 51. In this configuration, the external device may include, for example, a Shift-By-Wire (SBW) system, and a portion connected to the boss portion 51 may correspond to a control shaft (not shown) configured to provide rotational driving force to a detent plate.

The ring gear 60 is configured in a structure locally internally fitted to the input gear 40 via an eccentric tooth-meshing portion. In particular, the ring gear 60 is installed in a form fixed to the lower casing 12b of the gear housing 12, which constitutes the housing 10, such that its rotation is restricted so as to induce reduced rotation of the output-shaft gear 50 according to wobbling motion of the input gear 40.

In addition, the ring gear 60 is configured to continuously have internal teeth 61 along an entire circumferential region of its inner circumferential surface for eccentric tooth-meshing with the external teeth 41 of the input gear 40.

The ring gear 60 further includes a rotation-restricting protrusion portion 62 integrally provided on an outer circumferential surface thereof. In this configuration, the rotation-restricting protrusion portion 62 performs a role of restricting rotation of the ring gear 60 relative to the lower casing 12b of the gear housing 12. That is, the rotation-restricting protrusion portion 62 can restrict rotation of the ring gear 60 through coupling with a corresponding groove portion (not shown) formed in the lower casing 12b. For this purpose, it is preferable that the rotation-restricting protrusion portion 62 be provided at appropriate positions across the entire circumference of the outer circumferential surface of the ring gear 60.

As a result, since the ring gear 60 is installed in a state in which its rotation is restricted relative to the lower casing 12b, an appropriate reaction force can be provided against the eccentric motion of the input gear 40, and thus, reduced rotation of the output-shaft gear 50 can be achieved in interlocking with the eccentric motion of the input gear 40.

Meanwhile, the eccentric tooth-meshing portion refers to a local eccentric tooth-meshing formed between the external teeth 41 of the input gear 40 and the internal teeth 61 of the ring gear 60. The external teeth 41 of the input gear 40 are disposed eccentrically with respect to the shaft center of the drive shaft 30, and the internal teeth 61 of the ring gear 60 are disposed coaxially with the shaft center of the drive shaft 30 and meshed locally eccentrically with the external teeth 41 of the input gear 40. In this configuration, the external teeth 41 of the input gear 40 and the internal teeth 61 of the ring gear 60 constitute a cycloidal gear-type reduction gear train internally fitted in an eccentric state with respect to the shaft center of the drive shaft 30.

In addition, the wobbling-motion inducing part consists of inward paired protrusions 42 provided on the input gear 40 and outward paired receiving grooves 52 provided on the output-shaft gear 50 and configured to be coupled with the paired protrusions 42. That is, the wobbling-motion inducing part corresponds to an interlocking portion between the paired protrusions 42 of the input gear 40 and the paired receiving grooves 52 of the output-shaft gear 50.

In this configuration, the paired protrusions 42 and the paired receiving grooves 52 are each radially arranged continuously along entire circumferential regions of the input gear 40 and the output-shaft gear 50 with appropriate intervals therebetween so that tooth contact by tooth-meshing therebetween can be achieved.

For example, the paired protrusions 42 may be configured in a structure protruding radially inward from one side surface of the input gear 40 toward the paired receiving grooves 52 of the output-shaft gear 50. In addition, the paired receiving grooves 52 may be configured in a recessed structure extending radially outward from an outer circumferential surface of the output-shaft gear 50 toward the paired protrusions 42 of the input gear 40.

Accordingly, during rotation of the drive shaft 30, reduced rotation according to eccentric motion of the input gear 40 can be transferred to the reduced rotation of the output-shaft gear 50 via the wobbling-motion inducing part.

Described in more detail, during rotation of the drive shaft 30, the input gear 40 revolves while wobbling according to rotational force provided from the eccentric shaft portion 32 at a speed corresponding to a rotational speed of the electric motor 20, and simultaneously rotates at a reduced speed according to a reduction ratio set by the reduction gear unit via the local eccentric tooth-meshing between the external teeth 41 of the input gear 40 and the internal teeth 61 of the ring gear 60, so that reduced rotation of the output-shaft gear 50 can be achieved.

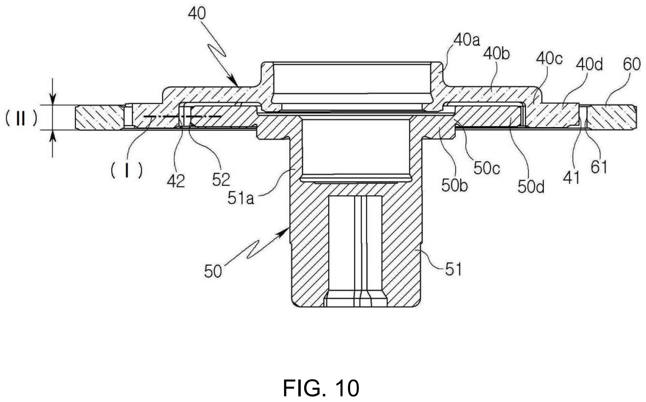

Meanwhile, as shown in Fig. 10, an overlapping power transmission structure, which corresponds to a core configuration in the rotary reduction actuator according to an embodiment of the present invention, is configured such that a center line (I) of a tooth-contact section between the input gear 40 and the output-shaft gear 50 is positioned within a meshing section (II) between the input gear 40 and the ring gear 60.

In this configuration, the center line (I) of the tooth-contact section between the input gear 40 and the output-shaft gear 50 refers to a center line (I) of a tooth-contact portion formed between the paired protrusions 42 of the input gear 40 and the paired receiving grooves 52 of the output-shaft gear 50.

In addition, the meshing section (II) between the input gear 40 and the ring gear 60 refers to a region of a meshing portion formed between the external teeth 41 of the input gear 40 and the internal teeth 61 of the ring gear 60.

That is, the tooth-contact section between the paired protrusions 42 of the input gear 40 and the paired receiving grooves 52 of the output-shaft gear 50, and the meshing section between the external teeth 41 of the input gear 40 and the internal teeth 61 of the ring gear 60 correspond respectively to portions where tooth contact and tooth meshing in a thickness direction of gear teeth occur.

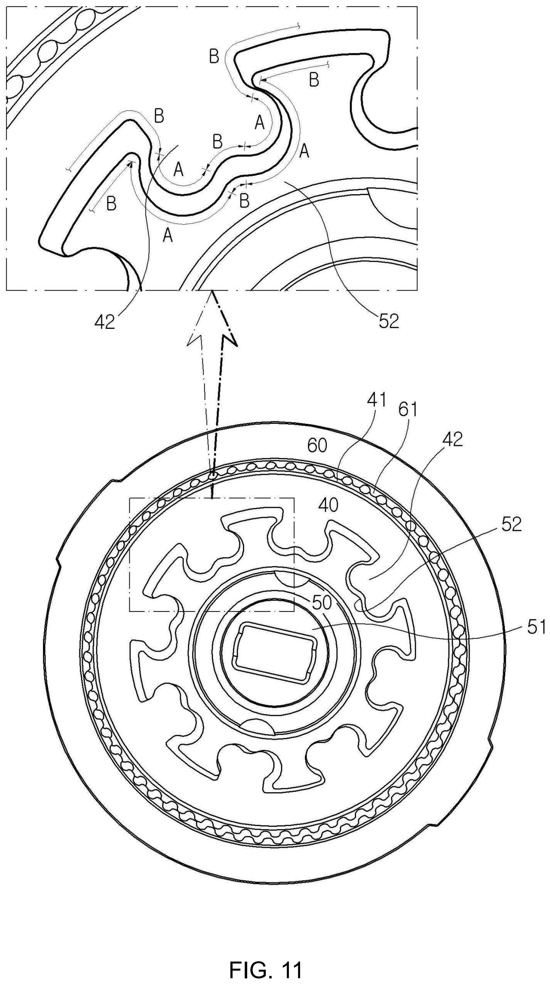

To achieve this, as shown in Fig. 11, the input gear 40 integrally includes a central boss portion 40a for axial coupling with the eccentric shaft portion 32 of the drive shaft 30, a first horizontal section 40b extending radially outward from the central boss portion 40a, a stepped portion 40c extending downward in a thickness direction from the first horizontal section 40b, and a second horizontal section 40d extending radially outward from the stepped portion 40c.

In particular, the external teeth 41 are formed on an outer circumferential surface of the second horizontal section 40d, and the paired protrusions 42 are formed on an inner circumferential surface of the stepped portion 40c.

As shown in Fig. 11, the output-shaft gear 50 integrally includes a central boss portion 50a for axial coupling with the mounting shaft portion 33 of the drive shaft 30, a first horizontal section 50b extending radially outward from the central boss portion 50a, a first horizontal section 50b extending radially outward from the boss portion 51, a stepped portion 50c extending upward in a thickness direction from the first horizontal section 50b, and a second horizontal section 50d extending radially outward from the stepped portion 50c.

In particular, the central boss portion 50a is formed to extend in an axial direction from the boss portion 51, and the paired receiving grooves 52 are formed on an outer circumferential surface of the second horizontal section 50d.

Meanwhile, in the rotary reduction actuator according to an embodiment of the present invention, detailed configurations of the inward paired protrusions 42 provided on the input gear 40 and the outward paired receiving grooves 52 provided on the output-shaft gear 50 and coupled with the paired protrusions 42 to constitute the wobbling-motion inducing part are as follows.

As shown in Fig. 11, the paired protrusions 42 are formed as convex radial structures projecting radially inward from an inner circumferential surface of the input gear 40 toward the paired receiving grooves 52 of the output-shaft gear 50, and the paired receiving grooves 52 are formed as concave radial structures recessed radially outward from an outer circumferential surface of the output-shaft gear 50 toward the paired protrusions 42 of the input gear 40.

In this configuration, the paired protrusions 42 and the paired receiving grooves 52 are each formed as arc-shaped structures having a specific curvature and are configured to include a contact region A where contact is made therebetween and a non-contact region B where no contact is made therebetween in a rotational direction of the input gear 40.

In this configuration, a proper clearance is provided between the paired protrusions 42 and the paired receiving grooves 52 between the contact region A and the non-contact region B.

In addition, it is preferable that contact between the paired protrusions 42 and the paired receiving grooves 52 is limited to at least one of the contact regions A, and simultaneous contact in a plurality of the contact regions A is not made.

To this end, the paired protrusions 42 are configured as structures symmetrical in left and right with respect to a reference axis directed in a radial direction of the input gear 40 in a plane of the input gear 40, and the paired receiving grooves 52 may be configured as structures symmetrical in left and right with respect to a reference axis directed in a radial direction of the ring gear 60 in a plane of the ring gear 60.

In addition, the paired protrusions 42 respectively include the contact region A and the non-contact region B on left and right sides with respect to the reference axis directed in a radial direction of the input gear 40, and the paired receiving grooves 52 respectively include the contact region A and the non-contact region B on left and right sides with respect to the reference axis directed in a radial direction of the ring gear 60.

Therefore, in the rotary reduction actuator according to the embodiment of the present invention configured as described above, since the center line (I) of the tooth-contact section between the input gear 40 and the output-shaft gear 50 is positioned within the meshing section (II) between the input gear 40 and the ring gear 60, shaking of gears generated respectively at the contact portion between the paired protrusions 42 of the input gear 40 and the paired receiving grooves 52 of the output-shaft gear 50 and at the meshing portion between the external teeth 41 of the input gear 40 and the internal teeth 61 of the ring gear 60 during a power transmission process can be reduced, thereby enabling more stable reduced transfer of power.

In particular, since the overlapping power transmission structure in the rotary reduction actuator according to the embodiment of the present invention allows the center line (I) of the tooth-contact section between the input gear 40 and the output-shaft gear 50 to be positioned within the meshing section (II) between the input gear 40 and the ring gear 60, an axial package of the reduction gear unit can be minimized, whereby spatial occupancy of the actuator components can be reduced when applied to a vehicle, thus providing an advantageous effect in terms of spatial freedom during layout settings with surrounding components.

## Claims

1. A rotary reduction actuator having an overlapping power transmission structure, comprising:
a drive shaft installed on an output side of an electric motor; and
a reduction gear unit configured to reduce and output rotation of the drive shaft,
wherein the reduction gear unit includes:
an input gear disposed eccentrically with respect to a rotation center of the drive shaft and installed to be rotatable relative to the drive shaft;
an output-shaft gear disposed coaxially with the drive shaft and interlocked with the input gear via a wobbling-motion inducing part while being installed to be rotatable relative to the drive shaft; and
a ring gear internally fitted to the input gear via an eccentric tooth-meshing portion and configured to induce reduced rotation of the output-shaft gear according to wobbling motion of the input gear,
wherein the eccentric tooth-meshing portion includes:
external teeth formed on an outer circumferential surface of the input gear; and
internal teeth formed on an inner circumferential surface of the ring gear and eccentrically meshed with the external teeth,
wherein the wobbling-motion inducing part includes:
paired protrusions provided on an inner circumferential surface of the input gear; and
paired receiving grooves provided on an outer circumferential surface of the output-shaft gear and configured to induce wobbling motion by receiving the paired protrusions,
wherein a center line of a tooth-contact section between the paired protrusions of the input gear and the paired receiving grooves of the output-shaft gear is positioned within a meshing section between the external teeth of the input gear and the internal teeth of the ring gear.

2. The rotary reduction actuator having an overlapping power transmission structure according to claim 1,
wherein the input gear includes:
a central boss portion for axial coupling with an eccentric shaft portion of the drive shaft;
a first horizontal section extending radially outward from the central boss portion;
a stepped portion extending downward in a thickness direction from the first horizontal section; and
a second horizontal section extending radially outward from the stepped portion,
wherein the external teeth are formed on an outer circumferential surface of the second horizontal section, and the paired protrusions are formed on an inner circumferential surface of the stepped portion.

3. The rotary reduction actuator having an overlapping power transmission structure according to claim 2,
wherein the output-shaft gear includes:
a central boss portion for axial coupling with a mounting shaft portion of the drive shaft;
a first horizontal section extending radially outward from the central boss portion;
a stepped portion extending upward in a thickness direction from the first horizontal section; and
a second horizontal section extending radially outward from the stepped portion,
wherein the central boss portion is formed to extend axially from a boss portion of the output-shaft gear, and the paired receiving grooves are formed on an outer circumferential surface of the second horizontal section.

4. The rotary reduction actuator having an overlapping power transmission structure according to claim 1,
wherein the paired protrusions are formed in a convex radial structure projecting radially inward from an inner circumferential surface of the input gear toward the paired receiving grooves of the output-shaft gear, and the paired receiving grooves are formed in a concave radial structure recessed radially outward from an outer circumferential surface of the output-shaft gear toward the paired protrusions of the input gear.

5. The rotary reduction actuator having an overlapping power transmission structure according to claim 4,
wherein the paired protrusions and the paired receiving grooves are each formed as arc-shaped structures having curvature, and are configured to include contact region where contact is made therebetween in a rotational direction of the input gear, and non-contact region where no contact is made therebetween, and a clearance is provided between the paired protrusions and the paired receiving grooves between the contact region and the non-contact region.

6. The rotary reduction actuator having an overlapping power transmission structure according to claim 5,
wherein contact between the paired protrusions and the paired receiving grooves is limited to at least one of the contact regions, and simultaneous contact in a plurality of the contact regions is not made.

7. The rotary reduction actuator having an overlapping power transmission structure according to claim 6,
wherein the paired protrusions are configured as structures symmetrical in left and right with respect to a reference axis lying in a plane of the input gear in a radial direction of the input gear,
and the paired receiving grooves are configured as structures symmetrical in left and right with respect to a reference axis lying in a plane of the output-shaft gear in a radial direction of the output-shaft gear.

8. The rotary reduction actuator having an overlapping power transmission structure according to claim 7,
wherein the paired protrusions respectively include the contact region and the non-contact region on left and right sides with respect to the reference axis extending in a radial direction of the input gear,
and the paired receiving grooves respectively include the contact region and the non-contact region on left and right sides with respect to the reference axis extending in a radial direction of the output-shaft gear.
